# EUROPEAN PATENT SPECIFICATION

(11) **EP 4 552 975 B1**
(45) Date of publication and mention of the grant of the patent: **07.10.2026**
(21) Application number: 24212362.8
(22) Date of filing: 12.11.2024
(51) Int. Cl.: B64C 25/26, B64C 25/22, B64C 25/24, B64C 25/30

(54) **LANDING GEAR CONTROLLER**
FAHRWERKSTEUERUNG
DISPOSITIF DE COMMANDE DE TRAIN D'ATTERRISSAGE

(30) Priority: 13.11.2023 GB 202317360
(43) Date of publication of application: 14.05.2025
(73) Proprietor: Airbus Operations Limited, Bristol BS34 7PA (GB)
(72) Inventor: KERR, Sean, Bristol, BS34 7PA (GB); JOHNSON, Mark, Bristol, BS34 7PA (GB)
(74) Representative: EIP

(56) References cited:
- WO-A1-2018/173765
- CN-A- 115 929 864
- GB-A- 2 585 065
- US-A1- 2022 024 566
- US-A1- 2022 324 556

## Description

### TECHNICAL FIELD

The present invention relates to a landing gear controller for an aircraft, a landing gear extension and retraction system for an aircraft, a method of controlling a landing gear extension and retraction system of an aircraft, a non-transitory storage medium, and an aircraft.

### BACKGROUND

An aircraft may be designed such that its maximum aircraft take-off performance accommodates obstacle-restricted airports for which aircraft take-off performance is a critical parameter. Such obstacles may include mountains or buildings in the vicinity of the airport, which must be sufficiently cleared by aircraft taking off from the airport.

In addition, aircraft are designed to meet all aircraft take-off performance requirements in the event of an engine failure during an aircraft take-off event (commonly referred to as a "one engine inoperative", or "OEI", event). While the aircraft will have been designed so that the remaining engine(s) can generate sufficient thrust to get the aircraft airborne with an acceptable safety margin, there will nevertheless be a reduction in total thrust generated or generatable by the engine(s) of the aircraft, thus reducing aircraft performance compared to an "all engines operative", or "AEO", situation.

Take-off performance can be influenced by internal and external factors, such as engine thrust, landing gear retraction time, actions taken by flight crew of the aircraft, runway topography and weather conditions.

CN115929864A discloses a backup redundancy lock retraction actuator, wherein if of one motor cannot actuate, another can complete unlocking and locking actions. WO2018/173765A1 discloses a control of a linear landing gear actuator that controls actuation such that when the landing gear is in the vicinity of a storage position, the rising speed of the landing gear by the linear actuator is reduced. US 2022/024566 A1 discloses controlling an extension speed of a landing gear assembly according to a difference between a load on the landing gear assembly and a target value. US 2022/324556 A1 discloses a controller configured to initiate automatic closing of a landing gear bay door when a predetermined door-closing criterion has been met and a command to retract a landing gear has not been received. GB 2 585 065 A discloses an aircraft landing gear control system that controls movement of one of a landing bay door and a landing gear on the basis of a position of the other of the landing bay door and the landing gear.

### SUMMARY

A first aspect of the present invention provides a landing gear controller for an aircraft. The landing gear controller is configured to: determine whether a predetermined criterion is met; and cause a power supply system of the aircraft to supply power to an actuation system of the aircraft to cause a component of a landing gear system of the aircraft to move from a first position to a second position selectively according to: a first predetermined supplied-power profile, when the landing gear controller determines that the predetermined criterion is not met, and a second predetermined supplied-power profile, according to which a maximum power supplied by the power supply system to the actuation system is greater than a maximum power supplied by the power supply system to the actuation system according to the first predetermined supplied-power profile, to move the component from the first position to the second position more quickly, when the landing gear controller determines that the predetermined criterion is met; and wherein the predetermined criterion comprises at least one of: that the aircraft is in a one-engine-inoperative state and that the aircraft is performing an aircraft take-off event at an obstacle-restricted airport .

The landing gear controller provides variable performance by the landing gear extension and retraction system to move the component from the first position to the second position. Repeatedly operating some aircraft systems at maximum performance may result in faster deterioration in system performance than operating the systems at a lower performance. The landing gear controller of the first aspect provides the advantage of causing the power supply system to supply a lower maximum power when supplying power according to the first predetermined supplied-power profile compared to when supplying power according to the second predetermined supplied-power profile. Accordingly, the power supply system and the actuation system may only be operated with the higher maximum power supplied according to the second predetermined supplied-power profile when required; that is, only when the predetermined criterion is met. Supplying power according to the first predetermined supplied-power profile when the predetermined criterion is not met may increase the life of the power system and the actuation system.

Typically, the more rapidly a component is moved between two different positions, the greater stress is experienced by the component, other components of the landing gear system, the landing gear extension and retraction system used to move the component and/or surrounding supporting structure of the aircraft. Accordingly, stress in the component of the landing gear, other components of the landing gear system, components of the landing gear extension and retraction system and/or the surrounding supporting structure may be reduced when the component is moved by power supplied according to the first predetermined supplied-power profile compared to when moved by power supplied according to the second predetermined supplied-power profile. By moving the component by power supplied according to the second predetermined supplied-power profile only when required, that is only when the predetermined criterion is met, a risk of stress-related failure in the landing gear component, other components of the landing gear system, the landing gear extension and retraction system or the surrounding supporting structure may be reduced.

In flight situations in which the predetermined criterion is met, it may be advantageous to move the component from the first position to the second position in a shorter time than a time in which the component is moved in other flight situations in which the predetermined criterion is not met. The landing gear controller enables different predetermined supplied-power profiles to be used for movement of the component from the first position to the second position within different time periods.

When the predetermined criterion comprises that the aircraft is in a one-engine-inoperative state, thrust generated by the aircraft is reduced compared to an all-engines-operative state. During an aircraft take-off event in a one-engine-inoperative state, drag caused by components of the landing gear system that protrude from a fuselage of the aircraft may have a more significant adverse impact on aircraft climb performance. Therefore, retracting said components to within an envelope of the fuselage in a shorter time period than in an all-engines-operative state may be beneficial.

When the predetermined criterion comprises that the aircraft is performing an aircraft take-off event at an obstacle-restricted airport, low speed performance of an aircraft may be more critical, for example during a climb phase of an aircraft take-off event, than at other airports. Accordingly, retracting components of the landing gear system to within an envelope of the fuselage in a shorter time period than in at other airports may be beneficial.

When the predetermined criterion comprises that the aircraft is performing an aircraft take-off event at an obstacle-restricted airport in a one-engine-inoperative state, retraction of components of the landing gear system to within the fuselage may be a critical factor in ensuring that the aircraft meets aircraft climb requirements. Accordingly, retracting components of the landing gear system to within the fuselage in a shorter time period than in other scenarios may be beneficial.

Also disclosed is a landing gear controller for an aircraft. The landing gear controller is configured to: determine whether a predetermined criterion is met; and cause movement of a component of a landing gear system of the aircraft from a first position to a second position selectively in: a first predetermined time period, when the landing gear controller determines that the predetermined criterion is not met, and in a second predetermined time period, less than the first predetermined time period, when the landing gear controller determines that the predetermined criterion is met.

In some aircraft flight scenarios, moving the component of the landing gear system from the first position to the second position more rapidly may be more critical than in other scenarios. However, moving the component from the first position to the second position in the second predetermined time period increases stress on the component and on surrounding support structured compared to the first predetermined time period. Accordingly, the landing gear controller allows variation in a time taken to move the component from the first position to the second position, so that the component is moved from the first position to the second position in the first determined time period, and thus less stress is generated, when the predetermined criterion is not met.

The landing gear controller may be configured to cause a power supply system of the aircraft to supply power to an actuation system of the aircraft to cause the movement of the component selectively in the first predetermined time period or the second predetermined time period.

References to 'the landing gear controller' below may refer to the landing gear controller of the first aspect.

The landing gear controller may be configured to receive one or more input signals, and to determine whether the predetermined criterion is met on the basis of the one or more input signals. The one or more input signals may be received from one or more other controllers of the aircraft, for example controllers of other systems of the aircraft. The one or more input signals may be indicative of one or more parameters indicative of whether the predetermined criterion is met.

The one or more input signals may, for example, be indicative of one or more of: an aircraft condition, a location status of the aircraft and/or a weather condition local to the aircraft. Such parameters may affect which of the two predetermined supplied-power profiles would be most suitable to move the component from the first position to the second position, and thus whether the predetermined criterion is met. An aircraft condition may, for example, comprise one or more of: engine thrust generated by engines of the aircraft, a status of the engines of the aircraft, a status of the landing gear extension and retraction system, aircraft speed, aircraft altitude, aircraft payload, aircraft fuel level and a location of the aircraft. A location status of the aircraft may, for example, comprise one or more of: a stage of a flight that the aircraft is in, a time of day that the aircraft is operating (for example some airports have different requirements, such maximum noise limits, at different times of day), and information regarding an airport that the aircraft is taking off from or landing at. Such information may comprise, for example, parameters specific to the airport such as altitude, runway length, whether the airport is obstacle-restricted, noise limits and local restrictions. A weather condition may, for example, comprise one or more of: wind speed and direction, a condition on the runway of the airport, air temperature, and ground temperature.

The landing gear controller may be configured to perform the determination as to whether the predetermined criterion is met before a command to move the component from the first position to the second position is received. This may decrease a time between receiving the command and initiating the movement. For example, the landing gear controller may be configured to perform the determination during an aircraft take-off event, for example whilst the aircraft is on the ground and/or before receiving a command to retract a landing gear of the landing gear system.

The landing gear controller may be configured to receive an input signal indicative of whether the predetermined criterion is met, and to cause the power supply to supply power according to the first or second predetermined supplied-power profile on the basis of the input signal. This may allow the landing gear controller to be supplied with less processing power than a landing gear controller configured to determine whether the predetermined criterion is met.

The landing gear controller may be configured to cause the power supply system to supply the power to the actuation system to cause the component to move from the first position to the second position, during an aircraft take-off event. An aircraft take-off event is typically a high-workload phase for flight crew of the aircraft. Accordingly, the landing gear controller causing the power supply to supply power according to the first or second predetermined supplied-power profile on the basis of whether the predetermined criterion is met may reduce a workload of the flight crew.

The component may be a landing gear of the landing gear system. It is generally desirable to retract a landing gear rapidly after aircraft take-off because of the drag that a landing gear generates when not retracted within a fuselage of the aircraft. Enabling faster landing gear retraction may increase a maximum pay load of the aircraft and/or increase an achievable climb rate of the aircraft.

However, landing gear retraction typically exerts the highest load on a landing gear extension and retraction system, and the highest stress on supporting structure for the landing gear extension and retraction system and/or landing gear system. A landing gear extension and retraction system and the supporting structure is therefore often sized based on the power required and the stresses incurred when retracting the landing gear. Accordingly, increasing a retraction speed of the landing gear is only advantageous to a point, beyond which the increased system size, complexity and weight required to enable the faster retraction negates the advantages conferred by retracting the landing gear faster.

In typical aircraft, a landing gear extension and retraction system is capable of retracting a landing gear according to a single retraction profile, and is sized to retract the landing gear within a predefined time, which is often based on a required landing gear retraction time during a performance-limited take-off event. Such events would be unusual, perhaps expected to occur just once during the life of the aircraft. The predefined time may thus be shorter than a time within which it is necessary to retract the landing gear during a take-off event that is not performance limited. Accordingly, a landing gear extension and retraction system may typically retract a landing gear more quickly than is necessary for a majority of landing gear retractions, and thus the surrounding supporting structure may be oversized relative to forces experienced by the surrounding supporting structure for the majority of landing gear retractions. The landing gear controller of the present invention allows a landing gear to be retracted according to different profiles, by supplying the power according to the first and second predetermined supplied-power profiles.

The landing gear may be moved from the first position to the second position within the predefined time when the power is supplied according to the second predetermined supplied-power profile, but not when the power is supplied according to the first predetermined supplied-power profile. That is, a time taken to move the landing gear from the first position to the second position is longer when moved according to the first predetermined supplied-power profile than according to the second predetermined supplied-power profile. The landing gear controller causing movement of the landing gear between the first and second positions with power supplied according to the second predetermined supplied-power profile only when the predetermined criterion is met may thus allow the landing gear extension and retraction system and/or the surrounding supporting structure to be reduced in size and/or may extend a life of the landing gear extension and retraction system.

The predetermined criterion may comprise that a performance-limited take-off event is occurring. The predetermined criterion may comprise that a performance-limited take-off event is occurring at an obstacle-restricted airport.

The first position may be an extended position of the landing gear and/or the second position may be a stowed, or retracted, position of the landing gear. Accordingly, a full retraction of the landing gear may be achieved by the landing gear controller causing the power supply to supply power to move the landing gear according to the first or second predetermined supplied-power profile.

The component may be a landing gear bay door of the landing gear system. Movement of a landing gear bay door is typically linked to movement of a landing gear, to allow the landing gear to move into or out of a landing gear bay, and is thus performed shortly before and shortly after and/or in parallel with retracting the landing gear. As discussed, this is typically when highest loads are exerted on the landing gear extension and retraction system and surrounding supporting structure. Accordingly, the landing gear controller causing movement of the landing gear bay door between the first and second positions with power supplied according to the second predetermined supplied-power profile only when the predetermined criterion is met may allow the landing gear extension and retraction system and/or the surrounding supporting structure to be reduced in size and/or may extend a life of the landing gear extension and retraction system.

The first position may be an open position of the landing gear bay door and/or the second position may be a closed position of the landing gear bay door. Accordingly, a full closure of the landing gear bay door may be achieved by the landing gear controller causing the power supply to supply power to move the landing gear bay door according to the first or second predetermined supplied-power profile.

The first and second predetermined supplied-power profiles may be fixed, for example before initiation of a flight cycle of the aircraft, and may be stored in a memory of, or accessible by, the landing gear controller. That is, the first and second predetermined supplied-power profiles may not be changed during movement of the component from the first position to the second position. This may provide repeatable, reliable movement of the component.

The power supplied to the actuation system according to the first and second predetermined supplied-power profiles may be non-constant during a movement of the component from the first position to the second position. This may provide more efficient movement of the component from the first position to the second position, for example by increasing power during a highest work phase of the movement of the component and/or to reduce a speed of movement of the component as the component approaches the second position.

The landing gear controller may be configured to cause the power supply system to supply the power to the actuation system from: a main power supply of the power supply system and an auxiliary power supply of the power supply system, when causing the power supply system to supply the power according to the second predetermined supplied-power profile, and the main power supply but not the auxiliary power supply when causing the power supply system to supply the power according to the first predetermined supplied-power profile. Accordingly, a maximum power supplied from the main power supply may be less than an overall maximum power supplied when supplying power according to the second predetermined supplied-power profile.

Also disclosed is a landing gear extension and retraction system, comprising a landing gear controller of the first aspect; the actuation system; and the power supply system.

A second aspect of the present invention provides landing gear extension and retraction system for an aircraft. The landing gear extension and retraction system is operable to provide power to move a component of a landing gear system of the aircraft from a first position to a second position, wherein the landing gear extension and retraction system is operable to provide the power selectively according to: a first predetermined supplied-power profile, when a predetermined criterion is not met, and a second predetermined supplied-power profile, according to which a maximum power provided is greater than a maximum power provided according to the first predetermined supplied-power profile, when the predetermined criterion is met and wherein the predetermined criterion comprises at least one of: that the aircraft is in a one-engine-inoperative state, and that the aircraft is performing an aircraft take-off event at an obstacle-restricted airport.

Reference to 'the landing gear extension and retraction system' below may refer the landing gear extension and retraction system according to the second aspect.

The landing gear extension and retraction system may experience variable loads to move the component of the landing gear from the first position to the second position, depending on whether the predetermined criterion is met. Lower loads may generally be generated when the landing gear extension and retraction system operable to provide the power according to the first predetermined supplied-power profile, compared to the second predetermined supplied-power profile. This may be associated with a longer life of the landing gear extension and retraction system and/or surrounding supporting structures with reduced strength and, in turn, reduced weight.

Whether the predetermined criterion is met may be based on one or more parameters that influence a speed at which the component should be moved from the first position to the second position. The landing gear extension and retraction system may comprise, or be in communication with, a controller configured to receive one or more signals indicative of the one or more parameters and, on the basis of the one or more signals, determine whether the predetermined criterion is met. The controller may be, or comprise, a landing gear controller according to the first aspect.

The landing gear extension and retraction system may comprise an actuation system configured to move the component of the landing gear system from the first position to the second position. The actuation system may comprise an actuator, for example a hydraulic or electromechanical actuator. The actuation system may be directly connected to the component, for example by the actuator.

The landing gear extension and retraction system may comprise a power supply system configured to provide the power to the actuation system selectively according to the first predetermined supplied-power profile or the second predetermined supplied-power profile. The power supply system may provide power from a power supply that is local to the landing gear extension and retraction system and/or from a power supply of the aircraft that is external to the landing gear extension and retraction system, for example that supplies power to one or more other systems of the aircraft.

The landing gear extension and retraction system may comprise a power control element configured to control a supply of power from the power supply system to the actuation system. The power control element may be changeable between a first configuration, in which a first maximum power is suppliable from the power supply system to the actuation system, and a second configuration, in which a second maximum power, greater than the first maximum power, is suppliable from the power supply system to the actuation system. The landing gear extension and retraction system may be configured to place the power control element in the first configuration when the predetermined criterion is not met, and in the second configuration when the predetermined criterion is met. Accordingly, the power control element may help to limit a maximum power suppliable when supplying the power according to the first and second predetermined supplied-power profiles. The power control element may thus help to control, or limit, a maximum speed of movement of the component of the landing gear from the first position to the second position.

The power control element may comprise a plurality of restrictors, and an open area of the plurality of restrictors may be greater when the power control element is in the second configuration than when the power control element is in the first configuration. Accordingly, more power may be suppliable from the power supply to the actuation system, via the plurality of restrictors, with the plurality of restrictors in the second configuration than with the plurality of restrictors in the first configuration. The plurality of restrictors may each be fixed restrictors, changeable only between a closed state, in which no power may pass the respective restrictor, and an open state in which a predefined amount of power may pass the respective restrictor. In some examples, a number of the restrictors are in the closed state in the first configuration and a lesser number of the restrictors are in the closed state in the second configuration.

The power control element may comprise a servo valve that is in a first valve position in the first configuration and in a second valve position in the second configuration. More power may be suppliable from the power supply system to the actuation system, via the servo valve, when the servo valve is in the second valve position than when the servo valve is in the first valve position. A servo valve may provide rapid and accurate change between the first and second positions, and thus in the power supplied from the power supply to the actuation system.

The power control element may comprise a variable restrictor. An open area of the variable restrictor may be greater when the power control element is in the second configuration than when the power control element is in the first configuration. This may provide a relatively simple arrangement compared to use of a plurality of fixed restrictors. An area of the variable restrictor may be continuously variable between a fully open state and a fully closed state. In the first configuration, the variable restrictor is in a state that is closer to the fully closed state than a state of the variable restrictor when in the second configuration.

The power supply system may comprise a main power supply and an auxiliary power supply. This may permit supply of power to the actuator system from one of the power supplies in the event that the other power supply is compromised. The auxiliary power supply may be configured to provide a 'boost functionality' to the main power supply. That is, the auxiliary power supply increases a maximum power suppliable from the power supply system to the actuation system, compared to a power supply system that does not comprise the auxiliary power supply.

The main power supply may be supplied directly from an aircraft main supply of the aircraft, which may be limited to supplying power at a maximum power threshold. The auxiliary power supply may be configured to supply power independently of a supply of power from the main power supply. For example, the auxiliary power supply may be configured to store power, for example from the main power supply. Accordingly, when supplying power from the main power supply and the auxiliary power supply, power may be suppliable to the actuation system at a level that is greater than the maximum power threshold. The maximum power supplied when supplying the power according to the second predetermined supplied-power profile may thus be greater than the maximum power threshold.

A maximum power level supplied from the main power supply to the actuation system may be the same according to both the first and second predetermined supplied-power profiles, and a maximum power level supplied from the auxiliary power supply to the actuation system may be greater according to the second predetermined supplied-power profile than according to the first predetermined supplied-power profile. This may help to simplify control of power supply from the mains and auxiliary power supplies, since only a supply of power from the auxiliary power supply need be changed to select supply of power according to the first or second predetermined supplied-power profiles.

The power supply system may be configured to provide no power to the actuation system from the auxiliary power supply when supplying power according to the first supplied-power profile. Accordingly, the auxiliary power supply may only be employed when the predetermined criterion is met, which may increase a life of the auxiliary power supply, the landing gear system and/or the surrounding support structure.

The auxiliary power supply may comprise an energy store, and the landing gear extension and retraction system may be configured to supply energy stored in the energy store to the actuation system to move the component of the landing gear system from the first position to the second position. The energy store may be supplied, filled or charged by the main power supply.

The power supply system may be a hydraulic power supply system. The energy store may comprise an accumulator.

The power supply system may be an electrical or electromechanical system. The energy store may comprise a battery.

The main power supply may comprise a main fluid supply and a main pump to supply working fluid from the main fluid supply to the actuation system. The auxiliary power supply may comprise an auxiliary fluid supply and an auxiliary pump to supply working fluid from the auxiliary fluid supply to the actuation system. When the auxiliary pump is active, an increased flow of working fluid to the actuation system may be provided, increasing power supply to the actuation system and thus increasing a speed of movement of the component of the landing gear from the first position to the second position, without increasing a workload of the main pump. Providing a main pump separate to the auxiliary pump may thus allow the main pump and/or the main fluid supply to be of a smaller size than a system comprising a common pump and/or fluid supply to supply working fluid to the actuation system.

The landing gear extension and retraction system may be operable to provide the power selectively according to a third predetermined supplied-power profile, in the event that a supply of power from the main power supply to the actuation system is compromised. A maximum power supplied by the power supply system to the actuation system according to the third predetermined supplied-power profile may be less than the maximum power supplied according to the second predetermined supplied-power profile. This may provide a level of redundancy in the landing gear extension and retraction system, to move the component even in the event that the main power supply is compromised.

The landing gear extension and retraction system may be operable, in the event that a supply of power from the main power supply is compromised, to move the component of the landing gear system from the second position to the first position by supplying power from the auxiliary power supply to the actuation system. The landing gear extension and retraction system may be operable, in the event that a supply of power from the main power supply is not compromised, to move the component of the landing gear system from the second position to the first position by supplying power from only the main power supply to the actuation system.

The predetermined criterion may be any one of the predetermined criteria discussed above with respect to the first aspect.

The component of the landing gear system may be a landing gear and/or a landing gear bay door, as discussed above with respect to the first aspect.

A third aspect of the present invention provides a method of controlling a landing gear extension and retraction system of an aircraft. The method comprises: determining whether a predetermined criterion is met; and causing the landing gear extension and retraction system to provide power to a landing gear system of the aircraft to move a component of the landing gear system from a first position and to a second position, selectively according to: a first predetermined supplied-power profile, when it is determined that the predetermined criterion is not met; and a second predetermined supplied-power profile, according to which a maximum power provided from the landing gear extension and retraction system to the landing gear system is greater than a maximum power provided from the landing gear extension and retraction system to the landing gear system according to the first predetermined supplied-power profile to move the component from the first position to the second position more quickly, when it is determined that the predetermined criterion is met; wherein the predetermined criterion comprises at least one of: that the aircraft is in a one-engine-inoperative state, and that the aircraft is performing an aircraft take-off event at an obstacle-restricted airport..

The determining may be performed before a command to move the component from the first position to the second position is received.

The determining may be performed during an aircraft take-off event. The determining may be performed prior to receipt of a command to initiate a landing gear retraction sequence by the landing gear extension and retraction system.

The method may comprise receiving one or more input signals, and the determining may be performed on the basis of the one or more input signals. The one or more input signals may, for example, be indicative of one or more of: an aircraft condition, a location status of the aircraft and/or a weather condition as discussed above with reference to the first aspect. Such parameters may affect which predetermined supplied-power profile would be most suitable to move the component from the first position to the second position, and thus whether the predetermined criterion is met.

The method may be performed by the landing gear controller according to the first aspect.

The landing gear extension and retraction system may be the landing gear extension and retraction system according to the second aspect.

The predetermined criterion may be any one of the predetermined criteria discussed above with respect to the first aspect.

The component of the landing gear system may be a landing gear and/or a landing gear bay door, as discussed above with respect to the first aspect.

A fourth aspect of the present invention provides a non-transitory storage medium configured to store machine readable instructions which, when executed by a processor, cause the landing gear extension and retraction system according to the second aspect to perform a method according to the third aspect.

A fifth aspect of the present invention provides an aircraft comprising: a landing gear controller according to the first aspect; a landing gear extension and retraction system according to the second aspect; or a non-transitory storage medium according to the fourth aspect.

### BRIEF DESCRIPTION OF THE DRAWINGS

Embodiments of the invention will now be described, by way of example only, with reference to the accompanying drawings, in which:
Figure 1 shows a schematic view of an aircraft according to an example;
Figure 2 shows a schematic view of various systems and controllers of the aircraft of Figure 1, according to an example;
Figure 3 is a schematic view of a landing gear extension and retraction system according to an example, with a power control element of the landing gear extension and retraction system in a first configuration;
Figure 4 is a schematic view of the landing gear extension and retraction system of Figure 6, with the power control element in a second configuration;
Figure 5 graphically depicts movement of a component of the aircraft of Figure 1 from a first position to a second position by the landing gear extension and retraction system of Figure 3, the movement according to different example supplied-power profiles;
Figure 6 graphically depicts supplied power provided to move the component of the aircraft of Figure 1 from the first position to the second position by the landing gear extension and retraction system of Figure 3, according to different example supplied-power profiles;
Figure 7 is a schematic view of a landing gear extension and retraction system according to another example, with a power control element of the landing gear extension and retraction system in a first configuration;
Figure 8 is a schematic view of the landing gear extension and retraction system of Figure 7, with the power control element in a second configuration;
Figure 9 shows a method according to an example; and
Figure 10 is schematic diagram of a non-transitory storage medium according to an example.

### DETAILED DESCRIPTION

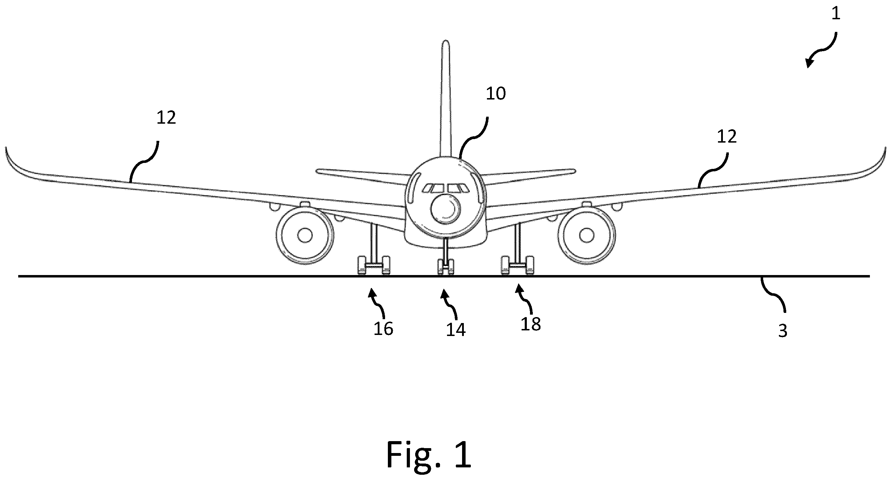

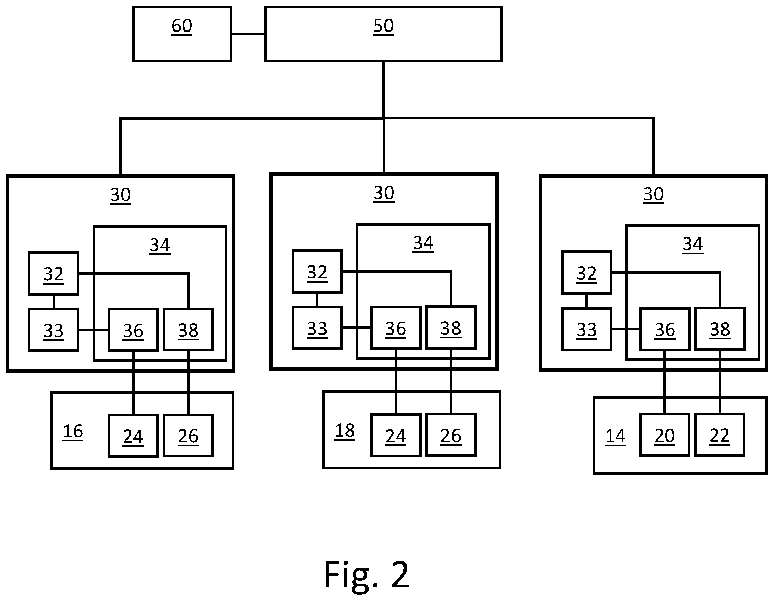

Figure 1 shows a front view of an aircraft 1 according to an example. The aircraft 1 comprises a fuselage 10, two wings 12 extending outwardly from the fuselage 10, a nose landing gear system 14, and two main landing gear systems 16, 18. As shown schematically in Figure 2, the nose landing gear system 14 comprises a nose landing gear 20 and a nose bay door 22 and the two main landing gear systems 16, 18 each comprise a main landing gear 24 and a main bay door 26. It will be appreciated that other example aircraft may have a different arrangement of landing gear systems. When the aircraft 1 is on the ground 3, as shown in Figure 1, the nose and main landing gears 20, 24 are each in an extended position and project below the fuselage 10 to support a weight of the aircraft 1. When the aircraft 1 is in-flight, the nose and main landing gears 20, 24 are generally held in a retracted position, in which the nose and main landing gears 20, 24 are stowed in respective landing gear bays (not shown) within an outer boundary of the fuselage 10. Stowing the nose and main landing gears 20, 24 in the landing gear bays during flight reduces drag on the aircraft 1 and noise generated by the aircraft 1.

Each landing gear bay is selectively coverable by the respective bay door 22, 26 that is movable from a closed position, in which an opening to the respective landing gear bay is at least partially obstructed by the bay door 22, 26 and the respective landing gear 20, 24 is inhibited by the bay door 22, 26 from passing into or out of the landing gear bay, to an open position, in which the respective landing gear 20, 24 may pass into or out of the respective landing gear bay to move between the retracted position and the extended position. When the landing gears 20, 24 are in the extended position or the retracted position, the bay doors 22, 26 are in the closed position. Positioning the bay doors 20, 24 in the closed position helps to inhibit debris from entering the respective landing gear bay and helps to reduce drag on the aircraft 1.

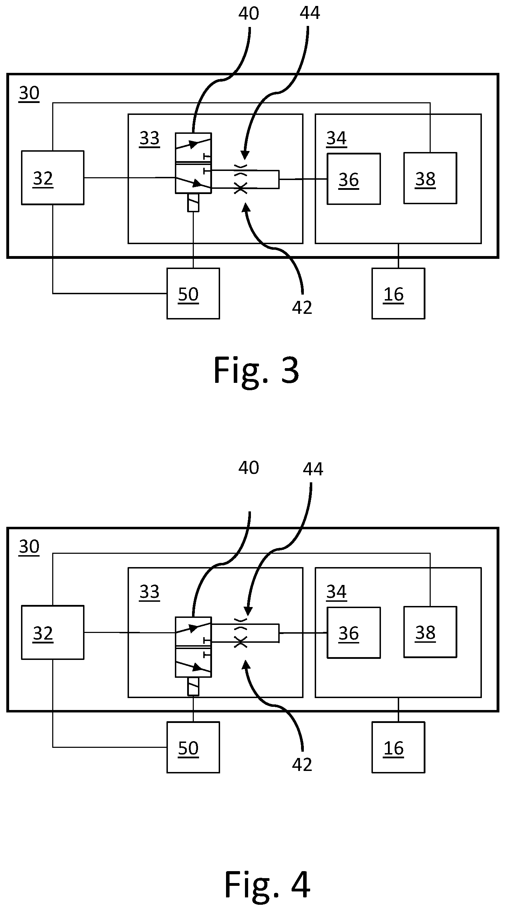

The nose and main landing gears 20, 24 are movable between the retracted and extended positions by respective landing gear extension and retraction systems 30, shown schematically in Figures 2 - 4. Figures 3 and 4 schematically show the landing gear extension and retraction system 30 associated with one of the main landing gear systems 16. The bay doors 22, 26 are movable between the open and closed positions by the respective landing gear extension and retraction systems 30. Each landing gear extension and retraction system 30 comprises a power supply system 32, a power control element 33 and an actuation system 34. The landing gear extension and retraction systems 30 are hydraulic systems in this example.

Each actuation system 34 comprises a landing gear actuator 36 directly connected to the landing gear 20, 24 of the respective landing gear system 14, 16, 18. Actuation of the landing gear actuator 36 moves the respective landing gear 20, 24 between the extended and retracted positions. Each actuation system 34 also comprises a bay door actuator 38 directly connected to the bay door 22, 26 of the respective landing gear system 14, 16, 18. Actuation of the bay door actuator 38 moves the respective bay door 22, 26 between the open and closed positions.

The power supply system 32 is arranged to selectively provide power to the actuation system 34 to move the landing gears 20, 24 and the bay doors 22, 26. In this example, each power supply system 32 is supplied with power from a main power supply of the aircraft 1 (not shown).

In each landing gear extension and retraction system 30, the power control element 33 is located between the power supply system 32 and the actuation system 34. More specifically, the power control element 33 is located between the power supply system 32 and the landing gear actuator 36. In use, the power control element 33 is arranged to permit either a first or a second amount of power to be supplied from the power supply system 32 to the landing gear actuator 36 to move the respective landing gear 20, 24 from the extended position to the retracted position. It will be appreciated that, in other examples, the power control element 33 may, additionally or alternatively, permit either the first or second amount of power to be supplied to the landing gear actuator 36 to move the respective landing gear 20, 24 from the retracted position to the extended position, and/or permit either the first or second amount of power to be supplied to the bay door actuator 38 to move the respective bay door 22, 26 between the open and closed positions.

In this example, as best shown in Figures 3 and 4, the power control element 33 comprises a selector valve 40, a first restrictor 42 and a second restrictor 44.

An open area of each of the first and second restrictors 42, 44 is fixed. The first restrictor 42 has a smaller open area than the second restrictor 44. In use, the first restrictor 42 permits a first maximum amount of power Max₁ to be supplied from the power supply system 32 to the landing gear actuator 36, and the second restrictor 44 permits a second maximum amount of power Max₂, greater than the first maximum amount of power Max₁, to be supplied from the power supply system 32 to the landing gear actuator 36.

The selector valve 40 is movable, in response to a valve command, between a first valve position, as shown in Figure 3, and a second valve position, as shown in Figure 4. In the first valve position, the selector valve 40 provides a power supply route from the power supply system 32 to the landing gear actuator 36 via only the first restrictor 42. In the second valve position, the selector valve 40 provides a power supply route from the power supply system 32 to the landing gear actuator 36 via only the second restrictor 44. Accordingly, a higher maximum flow rate of hydraulic fluid is supplied from the power supply system 32 to the actuation system 34 via the power control element 33 when the selector valve 40 is in the second valve position than when the selector valve 40 is in the first valve position. It will be appreciated that, in other examples, a selector valve with more than two positions may be provided, which may each allow different amounts of maximum power to be suppliable to the actuation system 34 via the selector valve.

The landing gear extension and retraction systems 30 are controlled by a landing gear controller 50. In this example, the landing gear controller 50 is common to all of the landing gear extension and retraction systems 30. It will be appreciated that in other examples, a separate landing gear controller 50 may be provided for each landing gear extension and retraction system 30. Alternatively, a nose landing gear controller may be provided to control the landing gear extension and retraction system 30 associated with the nose landing gear system 14 and a main landing gear controller may be provided to control both of the landing gear extension and retraction systems 30 associated with the main landing gear systems 16, 18.

In response to an extension command from the landing gear controller 50, issued prior to an aircraft landing event, each landing gear extension and retraction system 30 is caused to perform a landing gear extension sequence. During the landing gear extension sequence, each landing gear extension and retraction system 30 is caused to supply power from the power supply system 30 to the actuation system 34 to actuate the bay door actuator 38 to move the bay door 22, 26 from the closed position to the open position, actuate the landing gear actuator 34 to move the respective landing gear 20, 24 from the retracted position to the extended position, and subsequently actuate the bay door actuator 38 to move the bay door 22, 26 from the open position the closed position. Prior to causing the landing gear extension and retraction systems 30 to perform the landing gear extension sequence, the landing gear controller 50 places the selector valve 40 in the first valve position because a maximum power suppliable to the actuation system 34, with the selector valve 40 in the first valve position, is sufficient to extend the landing gear 20, 24.

In this example, the landing gear controller 50 generates the extension command in response to an extension signal generated by a flight crew of the aircraft 1, in this examples via a user interface in a cockpit of the aircraft 1. In other examples, the landing gear controller 50 generates the extension command in response to an automatically generated signal indicative that the landing gears 20, 24 should be extended, for example an automatically generated signal generated in response to detection that an altitude of the aircraft 1 is below a threshold altitude and the landing gears 20, 24 are still stowed in the landing gear bays.

In response to a retraction command from the landing gear controller 50, issued after the aircraft 1 has taken off from the ground 3 during an aircraft take-off event, each landing gear extension and retraction system 30 is caused to perform a landing gear retraction sequence. During the landing gear retraction sequence, each landing gear extension and retraction system 30 is caused to actuate the bay door actuator 38 to move the bay door from the closed position to the open position, actuate the landing gear actuator 34 to move the respective landing gear 20, 24 from the extended position to the retracted position, and subsequently actuate the bay door actuator 38 to move the bay door 22, 26 from the open position the closed position.

In this example, the landing gear controller 50 generates the retraction command is during an initial climb phase of a flight cycle of the aircraft 1 in response to a retraction signal generated by the flight crew of the aircraft 1, in this examples via a user interface in a cockpit of the aircraft 1. In other examples, the retraction signal may be an automatically generated signal indicative that it is safe to retract the landing gears 20, 24.

Retraction of the landing gears 20, 24 will now be described.

A landing gear extension and retraction system 30 must be capable of retracting a respective landing gear 20, 24 within a predefined retraction period Tₚ, after issue of a retraction signal, to meet aircraft performance standards. The predefined retraction period Tₚ is typically set based on an aircraft take-off at an obstacle-restricted airport in a one-engine-inoperative situation. Some aircraft cannot operate at certain airports due to such restrictions. Aircraft landing gears are typically always retracted at the same rate, and thus within the predefined retraction period Tₚ. However, a large majority of aircraft take-off events are performed in situations that do not require the landing gears to be retracted within the predefined retraction period Tₚ. That is, the landing gears could be retracted slower whilst the aircraft remained within predefined performance parameters, for example above a minimum climb rate and below a maximum noise level.

Retracting the landing gears 20, 24 is one of the highest workload operations performed by a hydraulic system of the aircraft 1. Accordingly, stress in the landing gear extension and retraction systems 30, the landing gear systems 14, 16, 18 and on surrounding supporting structure (not shown) of the aircraft is highest during a retraction sequence of the landing gears 20, 24. This is particularly true for retraction of the main landing gears 24, which are typically larger than the nose landing gear 20. Stresses experienced during landing gear retraction are thus typically used to size a landing gear extension and retraction system, landing gear system and surrounding supporting structure. There is a general desire to reduce the size and weight of aircraft components to increase efficiency.

Repeatedly operating some aircraft systems at maximum performance may result in faster deterioration in system performance than operating said systems at a lower performance. Accordingly, only retracting the landing gears 20, 24 within the predefined retraction period Tₚ when required may increase a life of components of the landing gear extension and retraction systems 30 and/or the landing gear systems 14, 16, 18.

Prior to causing the landing gear extension and retraction systems 30 to perform the landing gear retraction sequence, the landing gear controller 50 determines whether to place the selector valve 40 in the first valve position or the second valve position, as will now be described. With the selector valve 40 in the first valve position, the landing gear controller 50 and the landing gear extension and retraction system 30 enable the landing gears to be retracted within a time that is greater than the predefined retraction period Tₚ. With the selector valve 40 in the second valve position, the landing gear controller 50 and the landing gear extension and retraction system 30 enable the landing gears to be retracted in a time that is no more than the predefined retraction period Tₚ.

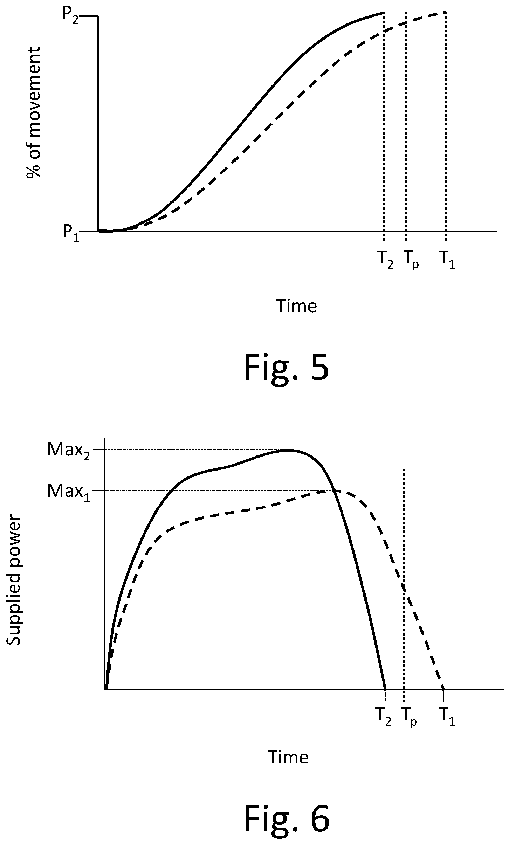

Movement of the landing gears 20, 24 from the extended position to the retracted position during the landing gear retraction sequence is faster with the selector valves 40 in the second valve position than with the selector valves 40 in the first valve position, due to the open area of the second restrictor 44 being greater than the open area of the first restrictor 42. This is graphically depicted in Figure 5, which plots a percentage of movement from the extended position P₁ to the retracted position P₂ against time. With the selector valve 40 in the first position (dashed line), movement of the landing gears 20, 24 is completed within a first period of time T₁ from initiation of the movement, which is greater than the predefined retraction period Tₚ. With the selector valve 40 in the second position (solid line), movement of the landing gears 20, 24 is completed within a second period of time T₂ from initiation of the movement, which is less than the first period of time T₁ and predefined retraction period Tₚ.

The landing gear controller 50 is in communication with a number of other aircraft systems, generally designated 60 in Figure 2. The other aircraft systems 60 send signals to the landing gear controller 50 that are indicative of whether retraction of the landing gears 20, 24 in the second period of time T₂ is required, or whether retraction of the landing gears 20, 24 in the first period of time T₁ is sufficient. The signals are thus indicative of respective parameters that influence whether the selector valves 40 should be in the first or second valve position.

In this example, the signals comprise a first signal indicative of a status of each engine of the aircraft, a second signal indicative that the aircraft is performing an aircraft take-off event, and a third signal indicative of whether the aircraft take-off event is occurring at an obstacle-restricted airport. It will be appreciated that, in other examples, other signals may additionally or alternatively be received by the landing gear controller 50 and used to determine whether the selector valve 40 should be in the first or second valve position.

On the basis of the first, second and third signals, the landing gear controller 50 determines whether a predetermined criterion is met. In this example, the predetermined criterion is met in the event that the landing gear controller 50 determines, on the basis of the signals, that the aircraft is performing an aircraft take-off event at an obstacle-restricted airport in a one-engine-inoperative state. The landing gear controller 50 places the selector valves 40 in the second valve position only when the landing gear controller 50 determines that the predetermined criterion is met. Otherwise, the landing gear controller 50 places the selector valves 40 in the first valve position. The landing gears 20, 24 are therefore moved from the extended position P₁ to the retracted position P₂ more quickly when the predetermined criterion is met than when the predetermined criterion is not met.

When the predetermined criterion is met, the landing gears 20, 24 are retracted with the selector valves 40 in the second valve position, and thus with a greater maximum power supply Max₂ from the respective power supply system 32 than when the predetermined criterion is not met, due to the open area of the second restrictor 44 being greater than the open area of the first restrictor 42.

The predetermined criterion may be expected to be met so rarely, that the landing gear extension and retraction systems 30, landing gear systems 14, 16, 18 and/or the surrounding supporting structure may undergo inspection, maintenance and/or replacement in the event that the landing gears 20, 24 are retraced with the selector valve 40 in the second valve position. Accordingly, a size of certain parts of the landing gear extension and retraction systems 30, landing gear systems 14, 16, 18 and/or surrounding supporting structure may be reduced in aircraft comprising the landing gear controller 50 and the landing gear extension and retraction systems 30.

Figure 6 plots supplied power from the respective one of the power supply systems 32 to the respective landing gear actuator 36, during a landing gear retraction sequence, with the selector valve 40 in the first position (dashed line) and in the second position (solid line) against time from initiation of the supply of power. With the selector valves 40 in the first position, the landing gear controller 50 causes power to be supplied from the power supply systems 32 to the respective landing gear actuators 36 in a first predetermined supplied-power profile, which has a maximum power supply Max₁. With the selector valves 40 in the second position, the landing gear controller 50 causes power to be supplied from the power supply systems 32 to the respective landing gear actuators 36 in a second predetermined supplied-power profile, which has a maximum power supply Max₂. "Predetermined" in the context of the first and second predetermined supplied-power profiles is to be interpreted as predefined prior to commencement of the landing gear retraction sequence, for example prior to the start of a flight cycle of the aircraft. In this example, the first and second predetermined supplied-power profiles are predetermined based on a type of the aircraft and a take-off weight of the aircraft.

As can be seen in Figure 6, Max₂ is greater than Max₁ by around 20%. In other examples Max₂ may be greater than Max₁ by a different percentage amount, for example 5-10%. Accordingly, the landing gears 20, 24 are moved from the extended position to the retracted position more rapidly when moved according to the second predetermined supplied-power profile than when moved according to the first predetermined supplied-power profile.

Whilst the supplied-power profiles shown in Figure 6 depict a supply of power from the power supply system 32 to the landing gear actuator 36, it will be appreciated that the supplied-power profiles may also comprise a supplied-power profile for a supply of power to the bay door actuator 28. A supply of power to the bay door actuator 28 may occur concurrently with the supplied-power profiles shown in Figure 6, or may be zero during a supply of power to the landing gear actuator 26 according to the first or second supplied-power profiles. It will be appreciated that the supplied-power profiles depicted in Figure 6 are shown by way of example only, and that other profiles are envisaged.

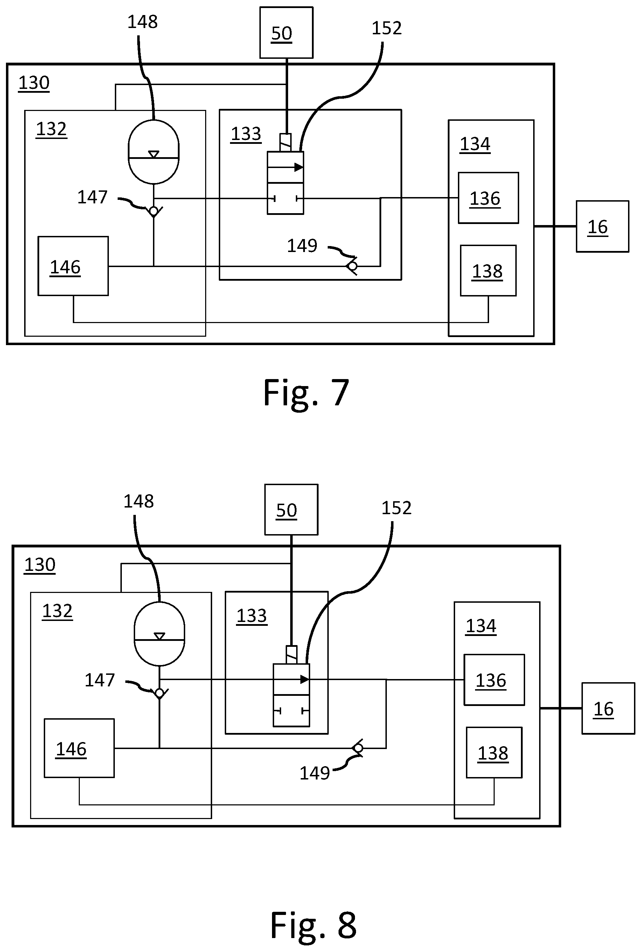

Figures 7 and 8 schematically show an alternative example landing gear extension and retraction system 130, which may be provided in the aircraft 1 in place of one or more of the landing gear extension and retraction systems 30 described above with reference to Figures 2-4. Common components have the same reference number, but increased by 100.

In this example, the power supply system 132 comprises a main power supply 146 and an auxiliary power supply 148. The main power supply 146 is, in this example, a main power supply of the aircraft 1 and is common to each of the landing gear extension and retraction systems 130. The auxiliary power supply 148 is an accumulator, which in this example is topped up by the main power supply 146 when the landing gear extension and retraction systems 130 are not performing a landing gear extension or retraction sequence. In this example, each landing gear extension and retraction system 130 has a respective auxiliary power supply 148. It will be appreciated that, in other examples, an auxiliary power supply 148 may be common to two or more of the landing gear extension and retraction systems 130. In still other examples, the auxiliary power supply 148 may be omitted from the landing gear extension and retraction system 30 associated with the nose landing gear system 14.

A first non-return valve 147 is positioned between the main power supply 146 and the accumulator 148, and inhibits a flow of hydraulic fluid from the accumulator 148 towards the main power supply 146.

The power control element 133 in this example comprises a shuttle valve 152 movable between a shut-off position, as shown in Figure 7, and a flow position, as shown in Figure 8. In the flow position, hydraulic fluid is permitted by the shuttle valve 152 to flow from the accumulator 148 to the landing gear actuator 136. In the shut-off position, hydraulic fluid is inhibited by the shuttle valve 152 from flowing from the accumulator 148 to the landing gear actuator 136.

The main power supply 146 is fluidly connected to the landing gear actuator 136 and the bay door actuator 138. A second non-return valve 149 is positioned between the main power supply 146 and the landing gear actuator 136, and inhibits a flow of hydraulic fluid from the landing gear actuator 136 and the shuttle valve 152 towards the main power supply 146.

The landing gear controller 50 moves the shuttle valve 152 between the flow position and the shut-off position depending on whether the predetermined criterion is met. In the event that the controller 50 determines that the predetermined criterion is not met, the controller 50 places the shuttle valve 152 in the shut-off position such that power is supplied to the landing gear actuator 136 from only the main power supply 146. In the event that the controller 50 determines that the predetermined criterion is met, the controller 50 places the shuttle valve 152 in the flow position such that power is supplied to the landing gear actuator 136 from the main power supply 146 and the accumulator 148. With the shuttle valve 152 in the flow position, hydraulic fluid is supplied to the landing gear actuator 136 at a faster rate than with the shuttle valve 152 in the shut-off position. Accordingly, more power is provided to the landing gear actuator 136 and the landing gear is moved from the extended position to the retracted position more rapidly than with the shuttle valve 152 in the shut-off position.

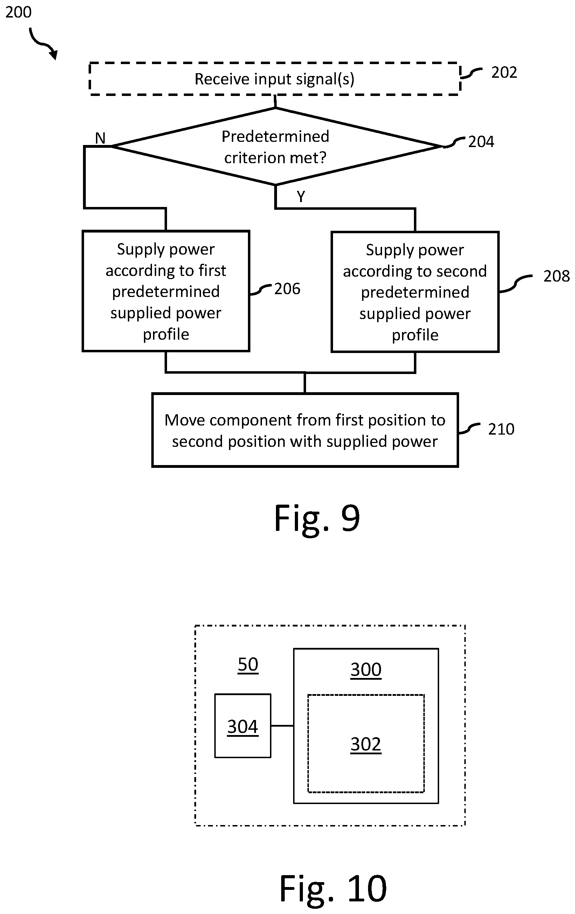

Figure 9 shows a method 200 of controlling a landing gear extension and retraction system of an aircraft according to an example. In this example, the landing gear extension and retraction system is a landing gear extension and retraction system 30, 130 as described above, and the aircraft is the aircraft 1 described above.

The method 200 comprises receiving 202 one or more input signals. The input signals comprise the first, second and third signals described above. In other examples, the receiving may be omitted as denoted by the dashed lines in Figure 9. The method 200 comprises determining 204 whether a predetermined criterion is met, in this example on the basis of the one or more input signals. The determining 204 is performed by the landing gear controller 50 described above.

When it is determined by the landing gear controller 50 that the predetermined criterion is not met, the method 200 comprises causing the landing gear extension and retraction system to provide power to a landing gear system of the aircraft to move a component of the landing gear from a first position to a second position according to a first predetermined supplied-power profile 206. When it is determined by the landing gear controller 50 that the predetermined criterion is met, the method 200 comprises causing the landing gear extension and retraction system to provide power to the landing gear system of the aircraft to move the component of the landing gear from a first position to a second position according to a second predetermined supplied-power profile 208. The landing gear system is one or more of the landing gear systems 14, 16, 18 described above.

The method 200 comprises moving 210 the component from the first position to the second position with the supplied power. In this example, the component is the landing gears 20, 24 of the aircraft 1, the first position is the extended position, and the second position is the retracted position.

A maximum power provided from the landing gear extension and retraction system to the landing gear system is greater when supplied according to the second predetermined supplied-power profile than when supplied according to the first predetermined supplied-power profile. Accordingly, the moving 210 occurs more rapidly when the power is supplied according to the second predetermined supplied-power profile than when the power is supplied according to the first predetermined supplied-power profile.

In this example, the method 200 is performed during an aircraft take-off event, with the determining 204 performed before receipt at the landing gear controller 50 of a command to move the component from the first position to the second position.

Figure 10 schematically shows a non-transitory storage medium 300 according to an example. The non-transitory storage medium 300 is comprised in the landing gear controller 50 and stores machine-readable instructions 302 which, when executed by a processor 304, cause the processor 304 to perform the method 200.

It will be appreciated that, in some examples, the component is, or comprises, one or more of the landing gears 20, 24 described above, the first position is the extended position, and the second position is the retracted position. It will be appreciated that in some examples, the component is, or comprises, one or more of the bay doors 22, 26 described above, the first position is the open position, and the second position is the closed position.

It will be appreciated that other examples are envisaged, as listed below by way of example only. The landing gear extension and retraction systems 30, 130 may each comprise a respective landing gear controller 50. The power supply systems 32, 132 may comprise a main pump used when the predetermined criterion is not met to pump hydraulic fluid from a fluid store to the actuation system, and an auxiliary pump used in conjunction with the main pump only when the predetermined criterion is met to pump hydraulic fluid from the fluid store to the actuation system. The power control element 33, 133 may comprise a servo valve, which may have a continuously variable open area, to provide a more variable maximum power supply from the power supply systems 32, 132 to the actuation systems 34, 134. The power control element 33, 133 may vary a supply of power to the actuation system for a landing gear extension sequence. The power control element 33, 133 may additionally or alternatively vary a supply of power to the bay door actuator 28, 128. The auxiliary power supply 148 may be common to two or more of the landing gear extension and retraction systems 130.

It will be appreciated that in other examples, the predetermined criterion for causing movement of the component at a faster rate than when the predetermined criterion is not met may be other than that described above. For example, the predetermined criterion may comprise that the aircraft has a total weight that exceeds a predefined weight, that a tailwind during an aircraft take-off event exceeds a threshold speed, or that the aircraft take-off event is occurring after a predefined time of day after which acceptable noise output is lower than before the predefined time of day.

It is to be noted that the term "or" as used herein is to be interpreted to mean "and/or", unless expressly stated otherwise.

## Claims

1. A landing gear controller (50) for an aircraft (1), the landing gear controller configured to:
determine whether a predetermined criterion is met; and
cause a power supply system (32) of the aircraft to supply power to an actuation system (34) of the aircraft to cause a component of a landing gear system (16) of the aircraft to move from a first position to a second position selectively according to:
a first predetermined supplied-power profile, when the landing gear controller determines that the predetermined criterion is not met, and
a second predetermined supplied-power profile, according to which a maximum power supplied by the power supply system to the actuation system is greater than a maximum power supplied by the power supply system to the actuation system according to the first predetermined supplied-power profile, to move the component from the first position to the second position more quickly, when the landing gear controller determines that the predetermined criterion is met; **characterised in that**
the predetermined criterion comprises at least one of: that the aircraft is in a one-engine-inoperative state and that the aircraft is performing an aircraft take-off event at an obstacle-restricted airport.

2. The landing gear controller according to claim 1, wherein the landing gear controller is configured to cause the power supply system to supply the power to the actuation system from:
a main power supply (146) of the power supply system and an auxiliary power supply (148) of the power supply system, when causing the power supply system to supply the power according to the second predetermined supplied-power profile, and
the main power supply but not the auxiliary power supply, when causing the power supply system to supply the power according to the first predetermined supplied-power profile.

3. The landing gear controller according to claim 1, or claim 2, configured to cause the power supply system to supply the power to the actuation system to cause the component to move from the first position to the second position, during an aircraft take-off event.

4. The landing gear controller according to any one of the preceding claims, configured to receive one or more input signals, and to determine whether the predetermined criterion is met on the basis of the one or more input signals.

5. The landing gear controller according to any one of the preceding claims, wherein the component is a landing gear (20), or wherein the component is a landing gear bay door (22), and optionally:
when the component is the landing gear, the first position is an extended position of the landing gear and the second position is a stowed position of the landing gear, or
wherein, when the component is the landing gear bay door, the first position is an open position of the landing gear bay door, and the second position is a closed position of the landing gear bay door.

6. A landing gear extension and retraction system (30) for an aircraft, the landing gear extension and retraction system being configured to provide power to move a component of a landing gear system of the aircraft from a first position to a second position, wherein the landing gear extension and retraction system is configured to provide the power selectively according to:
a first predetermined supplied-power profile, when a predetermined criterion is not met, and
a second predetermined supplied-power profile, according to which a maximum power provided is greater than a maximum power provided according to the first predetermined supplied-power profile, when the predetermined criterion is met; **characterised in that** the predetermined criterion comprises at least one of: that the aircraft is in a one-engine-inoperative state, and that the aircraft is performing an aircraft take-off event at an obstacle-restricted airport.

7. The landing gear extension and retraction system according to claim 6, comprising:
an actuation system configured to move the component of the landing gear system from the first position to the second position; and
a power supply system configured to provide the power to the actuation system selectively according to the first predetermined supplied-power profile or the second predetermined supplied-power profile.

8. The landing gear extension and retraction system according to claim 6, comprising a power control element configured to control a supply of power from the power supply system to the actuation system, wherein:
the power control element is changeable between a first configuration, in which a first maximum power is suppliable from the power supply system to the actuation system, and a second configuration, in which a second maximum power, greater than the first maximum power, is suppliable from the power supply system to the actuation system, and
the landing gear extension and retraction system is configured to place the power control element in the first configuration when the predetermined criterion is not met, and in the second configuration when the predetermined criterion is met.

9. The landing gear extension and retraction system according claim 8, wherein:
the power supply system comprises a main power supply and an auxiliary power supply,
a maximum power provided by the main power supply is the same according to both the first supplied-power profile and the second supplied-power profile, and
a maximum power provided by the auxiliary power supply is greater according to the second supplied-power profile than according to the first supplied-power profile, and optionally
wherein the power supply system is configured to provide no power to the actuation system from the auxiliary power supply when supplying power according to the first supplied-power profile.

10. A method (200) of controlling a landing gear extension and retraction system of an aircraft, the method comprising:
determining (204) whether a predetermined criterion is met; and
causing the landing gear extension and retraction system to provide power to a landing gear system of the aircraft to move a component of the landing gear system from a first position and to a second position, selectively according to:
a first predetermined supplied-power profile (206), when it is determined that the predetermined criterion is not met; and
a second predetermined supplied-power profile (208), according to which a maximum power provided from the landing gear extension and retraction system to the landing gear system is greater than a maximum power provided from the landing gear extension and retraction system to the landing gear system according to the first predetermined supplied-power profile, to move the component from the first position to the second position more quickly, when it is determined that the predetermined criterion is met;
**characterised in that** the predetermined criterion comprises at least one of: that the aircraft is in a one-engine-inoperative state, and that the aircraft is performing an aircraft take-off event at an obstacle-restricted airport.

11. A non-transitory storage medium (300) configured to store machine readable instructions which, when executed by a processor, cause the landing gear extension and retraction system of any one of claims 6 to 9 to perform the method according to claim 10.

12. An aircraft (1) comprising: a landing gear controller according to any one of claims 1 to 5; or a landing gear extension and retraction system according to any one of claims 6 to 9; or a non-transitory storage medium according to claim 11.

## Patentansprüche

1. Fahrwerksteuerung (50) für ein Flugzeug (1), wobei die Fahrwerksteuerung zu Folgendem konfiguriert ist:
Bestimmen, ob ein vorbestimmtes Kriterium erfüllt ist; und
Bewirken, dass ein Leistungsversorgungssystem (32) des Flugzeugs Leistung zu einem Betätigungssystem (34) des Flugzeugs zuführt, um zu bewirken, dass sich eine Komponente eines Fahrwerksystems (16) des Flugzeugs selektiv gemäß Folgendem von einer ersten Position zu einer zweiten Position bewegt:
einem ersten vorbestimmten Leistungsversorgungsprofil, wenn die Fahrwerksteuerung bestimmt, dass das vorbestimmte Kriterium nicht erfüllt ist, und
einem zweiten vorbestimmten Leistungsversorgungsprofil, gemäß dem eine maximale Leistung, die durch das Leistungsversorgungssystem zu dem Betätigungssystem zugeführt wird, größer ist als eine maximale Leistung, die gemäß dem ersten vorbestimmten Leistungsversorgungsprofil durch das Leistungsversorgungssystem zu dem Betätigungssystem zugeführt wird, um die Komponente schneller von der ersten Position zu der zweiten Position zu bewegen, wenn die Fahrwerksteuerung bestimmt, dass das vorbestimmten Kriterium erfüllt ist; **dadurch gekennzeichnet, dass** das vorbestimmte Kriterium mindestens eines von Folgendem umfasst: dass sich das Flugzeug in einem Zustand mit einem ausgefallenen Triebwerk befindet und dass das Flugzeug ein Flugzeugstartereignis an einem durch Hindernisse beschränkten Flughafen durchführt.

2. Fahrwerksteuerung nach Anspruch 1, wobei die Fahrwerksteuerung dazu konfiguriert ist, zu bewirken, dass das Leistungsversorgungssystem die Leistung aus Folgendem zu dem Betätigungssystem zuführt:
einer Hauptleistungsversorgung (146) des Leistungsversorgungssystems und einer Hilfsleistungsversorgung (148) des Leistungsversorgungssystems, wenn bewirkt wird, dass das Leistungsversorgungssystem die Leistung gemäß dem zweiten vorbestimmten Leistungsversorgungsprofil zuführt, und
der Hauptleistungsversorgung, jedoch nicht der Hilfsleistungsversorgung, wenn bewirkt wird, dass das Leistungsversorgungssystem die Leistung gemäß dem ersten vorbestimmten Leistungsversorgungsprofil zuführt.

3. Fahrwerksteuerung nach Anspruch 1 oder Anspruch 2, die dazu konfiguriert ist, zu bewirken, dass das Leistungsversorgungssystem die Leistung zu dem Betätigungssystem während eines Flugzeugstartereignisses zuführt, um zu bewirken, dass sich die Komponente von der ersten Position zu der zweiten Position bewegt.

4. Fahrwerksteuerung nach einem der vorhergehenden Ansprüche, die dazu konfiguriert ist, ein oder mehrere Eingangssignale zu empfangen und basierend auf dem einen oder den mehreren Eingangssignalen zu bestimmen, ob das vorbestimmte Kriterium erfüllt ist.

5. Fahrwerksteuerung nach einem der vorhergehenden Ansprüche, wobei die Komponente ein Fahrwerk (20) ist, oder wobei die Komponente eine Fahrwerkschachttür (22) ist, und optional:
wobei, wenn die Komponente das Fahrwerk ist, die erste Position eine ausgefahrene Position des Fahrwerks ist und die zweite Position eine verstaute Position des Fahrwerks ist, oder
wobei, wenn die Komponente die Fahrwerkschachttür ist, die erste Position eine offene Position der Fahrwerkschachttür ist und die zweite Position eine geschlossene Position der Fahrwerkschachttür ist.

6. Fahrwerkausfahr- und -einfahrsystem (30) für ein Flugzeug, wobei das Fahrwerkausfahr- und -einfahrsystem dazu konfiguriert ist, Leistung bereitzustellen, um eine Komponente eines Fahrwerksystems des Flugzeugs von einer ersten Position zu einer zweiten Position zu bewegen, wobei das Fahrwerkausfahr- und -einfahrsystem dazu konfiguriert ist, die Leistung selektiv gemäß Folgendem bereitzustellen:
einem ersten vorbestimmten Leistungsversorgungsprofil, wenn ein vorbestimmtes Kriterium nicht erfüllt ist, und einem zweiten vorbestimmten Leistungsversorgungsprofil, gemäß dem eine maximale bereitgestellte Leistung größer ist als eine maximale Leistung, die gemäß dem ersten vorbestimmten Leistungsversorgungsprofil bereitgestellt wird, wenn das vorbestimmten Kriterium erfüllt ist; **dadurch gekennzeichnet, dass**
das vorbestimmte Kriterium mindestens eines von Folgendem umfasst: dass sich das Flugzeug in einem Zustand mit einem ausgefallenen Triebwerk befindet und dass das Flugzeug ein Flugzeugstartereignis an einem durch Hindernisse beschränkten Flughafen durchführt.

7. Fahrwerkausfahr- und -einfahrsystem nach Anspruch 6, das Folgendes umfasst:
ein Betätigungssystem, das dazu konfiguriert ist, die Komponente des Fahrwerksystems von der ersten Position zu der zweiten Position zu bewegen; und
ein Leistungsversorgungssystem, das dazu konfiguriert ist, die Leistung selektiv gemäß dem ersten vorbestimmten Leistungsversorgungsprofil oder dem zweiten vorbestimmten Leistungsversorgungsprofil zu dem Betätigungssystem bereitzustellen.

8. Fahrwerkausfahr- und -einfahrsystem nach Anspruch 6, das ein Leistungssteuerelement umfasst, das dazu konfiguriert ist, eine Leistungsversorgung von dem Leistungsversorgungssystem zu dem Betätigungssystem zu steuern, wobei:
das Leistungssteuerelement zwischen einer ersten Konfiguration, in der eine erste maximale Leistung von dem Leistungsversorgungssystem zu dem Betätigungssystem zuführbar ist, und einer zweiten Konfiguration, in der eine zweite maximale Leistung, die größer als die erste maximale Leistung ist, von dem Leistungsversorgungssystem zu dem Betätigungssystem zuführbar ist, gewechselt werden kann, und
das Fahrwerkausfahr- und -einfahrsystem dazu konfiguriert ist, das Leistungssteuerelement in die erste Konfiguration zu versetzen, wenn das vorbestimmte Kriterium nicht erfüllt ist, und in die zweite Konfiguration zu versetzen, wenn das vorbestimmte Kriterium erfüllt ist.

9. Fahrwerkausfahr- und -einfahrsystem nach Anspruch 8, wobei:
das Leistungsversorgungssystem eine Hauptleistungsversorgung und eine Hilfsleistungsversorgung umfasst,
eine durch die Hauptleistungsversorgung bereitgestellte maximale Leistung gemäß sowohl dem ersten Leistungsversorgungsprofil als auch dem zweiten Leistungsversorgungsprofil gleich ist, und
eine durch die Hilfsleistungsversorgung bereitgestellte maximale Leistung gemäß dem zweiten Leistungsversorgungsprofil größer ist als gemäß dem ersten Leistungsversorgungsprofil, und optional wobei das Leistungsversorgungssystem dazu konfiguriert ist, dem Betätigungssystem keine Leistung aus der Hilfsleistungsversorgung bereitzustellen, wenn Leistung gemäß dem ersten Leistungsversorgungsprofil zugeführt wird.

10. Verfahren (200) zum Steuern eines Fahrwerkausfahr- und -einfahrsystems eines Flugzeugs, wobei das Verfahren Folgendes umfasst:
Bestimmen (204), ob ein vorbestimmtes Kriterium erfüllt ist; und
Bewirken, dass das Fahrwerkausfahr- und -einfahrsystem selektiv gemäß Folgendem Leistung zu einem Fahrwerksystem des Flugzeugs bereitstellt, um eine Komponente des Fahrwerksystems von einer ersten Position und zu einer zweiten Position zu bewegen:
einem ersten vorbestimmten Leistungsversorgungsprofil (206), wenn bestimmt wird, dass das vorbestimmte Kriterium nicht erfüllt ist; und
einem zweiten vorbestimmten Leistungsversorgungsprofil (208), gemäß dem eine von dem Fahrwerkausfahr- und - einfahrsystem zu dem Fahrwerksystem bereitgestellte maximale Leistung größer ist als eine maximale Leistung, die gemäß dem ersten vorbestimmten Leistungsversorgungsprofil von dem Fahrwerkausfahr- und -einfahrsystem zu dem Fahrwerksystem bereitgestellt wird, um die Komponente schneller von der ersten Position zu der zweiten Position zu bewegen, wenn bestimmt wird, dass das vorbestimmte Kriterium erfüllt ist;
**dadurch gekennzeichnet, dass**
das vorbestimmte Kriterium mindestens eines von Folgendem umfasst: dass sich das Flugzeug in einem Zustand mit einem ausgefallenen Triebwerk befindet und dass das Flugzeug ein Flugzeugstartereignis an einem durch Hindernisse beschränkten Flughafen durchführt.

11. Nichtflüchtiges Speichermedium (300), das dazu konfiguriert ist, maschinenlesbare Anweisungen zu speichern, die, wenn sie durch einen Prozessor ausgeführt werden, bewirken, dass das Fahrwerkausfahr- und - einfahrsystem nach einem der Ansprüche 6 bis 9 das Verfahren nach Anspruch 10 durchführt.

12. Flugzeug (1), das Folgendes umfasst: eine Fahrwerksteuerung nach einem der Ansprüche 1 bis 5; oder ein Fahrwerkausfahr- und -einfahrsystem nach einem der Ansprüche 6 bis 9; oder ein nichtflüchtiges Speichermedium nach Anspruch 11.

## Revendications

1. Unité de commande de train d'atterrissage (50) pour un aéronef (1), l'unité de commande de train d'atterrissage étant configurée pour :
déterminer si un critère prédéterminé est respecté ; et amener un système d'alimentation en puissance (32) de l'aéronef à effectuer l'alimentation en puissance à un système d'actionnement (34) de l'aéronef pour amener un composant d'un système de train d'atterrissage (16) de l'aéronef à se déplacer depuis une première position jusqu'à une seconde position sélectivement selon :
un premier profil prédéterminé de puissance en laquelle est effectuée l'alimentation, lorsque l'unité de commande de train d'atterrissage détermine que le critère prédéterminé n'est pas respecté, et
un second profil prédéterminé de puissance en laquelle est effectuée l'alimentation, selon lequel une puissance maximum en laquelle est effectuée l'alimentation par le système d'alimentation en puissance au système d'actionnement est plus grande qu'une puissance maximum en laquelle est effectuée l'alimentation par le système d'alimentation en puissance au système d'actionnement selon le premier profil prédéterminé de puissance en laquelle est effectuée l'alimentation, pour déplacer le composant depuis la première position jusqu'à la seconde position plus rapidement, lorsque l'unité de commande de train d'atterrissage détermine que le critère prédéterminé est respecté ; **caractérisé en ce que**
le critère prédéterminé comprend au moins un fait parmi :
le fait que l'aéronef est dans un état avec un moteur non en fonctionnement et le fait que l'aéronef est en train de réaliser un événement de décollage d'aéronef à un aéroport avec restriction par obstacles.

2. Unité de commande de train d'atterrissage selon la revendication 1, dans laquelle l'unité de commande de train d'atterrissage est configurée pour amener le système d'alimentation en puissance à effectuer l'alimentation en la puissance au système d'actionnement depuis :
une alimentation en puissance principale (146) du système d'alimentation en puissance et une alimentation en puissance auxiliaire (148) du système d'alimentation en puissance, lorsque le système d'alimentation en puissance est amené à effectuer l'alimentation en la puissance selon le second profil prédéterminé de puissance en laquelle est effectuée l'alimentation, et
l'alimentation en puissance principale et non l'alimentation en puissance auxiliaire, lorsque le système d'alimentation en puissance est amené à effectuer l'alimentation en la puissance selon le premier profil prédéterminé de puissance en laquelle est effectuée l'alimentation.

3. Unité de commande de train d'atterrissage selon la revendication 1, ou la revendication 2, configuré pour amener le système d'alimentation en puissance à effectuer l'alimentation en la puissance au système d'actionnement pour amener le composant à se déplacer depuis la première position jusqu'à la seconde position, durant un événement de décollage d'aéronef.

4. Unité de commande de train d'atterrissage selon l'une quelconque des revendications précédentes, configurée pour recevoir un ou plusieurs signaux d'entrée, et pour déterminer si le critère prédéterminé est respecté sur la base de l'un ou des plusieurs signaux d'entrée.

5. Unité de commande de train d'atterrissage selon l'une quelconque des revendications précédentes, dans laquelle le composant est un train d'atterrissage (20), ou dans laquelle le composant est une trappe de baie de train d'atterrissage (22), et facultativement :
lorsque le composant est le train d'atterrissage, la première position est une position descendue du train d'atterrissage et la seconde position est une position relevée du train d'atterrissage, ou
dans laquelle, lorsque le composant est la trappe de baie de train d'atterrissage, la première position est une position ouverte de la trappe de baie de train d'atterrissage, et la seconde position est une position fermée de la trappe de baie de train d'atterrissage.

6. Système de descente et de relevage de train d'atterrissage (30) pour un aéronef, le système de descente et de relevage de train d'atterrissage étant configuré pour fournir une puissance pour déplacer un composant d'un système de train d'atterrissage de l'aéronef depuis une première position jusqu'à une seconde position, dans lequel le système de descente et de relevage de train d'atterrissage est configuré pour fournir la puissance sélectivement selon :
un premier profil prédéterminé de puissance en laquelle est effectuée l'alimentation, lorsqu'un critère prédéterminé n'est pas respecté, et
un second profil prédéterminé de puissance en laquelle est effectuée l'alimentation, selon lequel une puissance maximum fournie est plus grande qu'une puissance maximum fournie selon le premier profil prédéterminé de puissance en laquelle est effectuée l'alimentation, lorsque le critère prédéterminé est respecté ;
**caractérisé en ce que**
le critère prédéterminé comprend au moins un fait parmi :
le fait que l'aéronef est dans un état avec un moteur non en fonctionnement, et le fait que l'aéronef est en train de réaliser un événement de décollage d'aéronef à un aéroport avec restriction par obstacles.

7. Système de descente et de relevage de train d'atterrissage selon la revendication 6, comprenant :
un système d'actionnement configuré pour déplacer le composant du système de train d'atterrissage depuis la première position jusqu'à la seconde position ; et
un système d'alimentation en puissance configuré pour fournir la puissance au système d'actionnement sélectivement selon le premier profil prédéterminé de puissance en laquelle est effectuée l'alimentation ou le second profil prédéterminé de puissance en laquelle est effectuée l'alimentation.

8. Système de descente et de relevage de train d'atterrissage selon la revendication 6, comprenant un élément de commande de puissance configuré pour commander une alimentation en puissance depuis le système d'alimentation en puissance au système d'actionnement, dans lequel :
l'élément de commande de puissance est changeable entre une première configuration, dans laquelle l'alimentation en une première puissance maximum peut être effectuée depuis le système d'alimentation en puissance au système d'actionnement, et une seconde configuration, dans laquelle une seconde puissance maximum, plus grande que la première puissance maximum, peut être effectuée depuis le système d'alimentation en puissance au système d'actionnement, et
le système de descente et de relevage de train d'atterrissage est configuré pour placer l'élément de commande de puissance dans la première configuration lorsque le critère prédéterminé n'est pas respecté, et dans la seconde configuration lorsque le critère prédéterminé est respecté.

9. Système de descente et de relevage de train d'atterrissage selon la revendication 8, dans lequel :
le système d'alimentation en puissance comprend une alimentation en puissance principale et une alimentation en puissance auxiliaire,
une puissance maximum fournie par l'alimentation en puissance principale est la même selon à la fois le premier profil de puissance en laquelle est effectuée l'alimentation et le second profil de puissance en laquelle est effectuée l'alimentation, et
une puissance maximum fournie par l'alimentation en puissance auxiliaire est plus grande selon le second profil de puissance en laquelle est effectuée l'alimentation que selon le premier profil de puissance en laquelle est effectuée l'alimentation, et facultativement
dans lequel le système d'alimentation en puissance est configuré pour ne fournir aucune puissance au système d'actionnement depuis l'alimentation en puissance auxiliaire lorsque l'alimentation en puissance est effectuée selon le premier profil de puissance en laquelle est effectuée l'alimentation.

10. Procédé (200) de commande d'un système de descente et de relevage de train d'atterrissage d'un aéronef, le procédé comprenant :
déterminer (204) si un critère prédéterminé est respecté ; et
amener le système de descente et de relevage de train d'atterrissage à fournir une puissance à un système de train d'atterrissage de l'aéronef pour déplacer un composant du système de train d'atterrissage depuis une première position et jusqu'à une seconde position, sélectivement selon :
un premier profil prédéterminé de puissance en laquelle est effectuée l'alimentation (206), lorsqu'il est déterminé que le critère prédéterminé n'est pas respecté ; et
un second profil prédéterminé de puissance en laquelle est effectuée l'alimentation (208), selon lequel une puissance maximum fournie depuis le système de descente et de relevage de train d'atterrissage au système de train d'atterrissage est plus grande qu'une puissance maximum fournie depuis le système de descente et de relevage de train d'atterrissage au système de train d'atterrissage selon le premier profil prédéterminé de puissance en laquelle est effectuée l'alimentation, pour déplacer le composant depuis la première position jusqu'à la seconde position plus rapidement, lorsqu'il est déterminé que le critère prédéterminé est respecté ;
**caractérisé en ce que**
le critère prédéterminé comprend au moins un fait parmi :
le fait que l'aéronef est dans un état avec un moteur non en fonctionnement, et le fait que l'aéronef est en train de réaliser un événement de décollage d'aéronef à un aéroport avec restriction par obstacles.

11. Support de stockage non transitoire (300) configuré pour stocker des instructions lisibles par machine qui, lorsqu'elles sont exécutées par un processeur, amènent le système de descente et de relevage de train d'atterrissage de l'une quelconque des revendications précédentes 6 à 9 à réaliser le procédé selon la revendication 10.

12. Aéronef (1), comprenant : une unité de commande de train d'atterrissage selon l'une quelconque des revendications précédentes 1 à 5 ; ou un système de descente et de relevage de train d'atterrissage selon l'une quelconque des revendications précédentes 6 à 9 ; ou un support de stockage non transitoire selon la revendication 11.
